# EUROPÄISCHE PATENTSCHRIFT

(11) **EP 2 358 519 B1**
(45) Veröffentlichungstag und Bekanntmachung des Hinweises auf die Patenterteilung: **19.12.2012**
(21) Anmeldenummer: 09784017.7
(22) Anmeldetag: 15.10.2009
(51) Int. Cl.: B29D 30/24

(54) **VORRICHTUNG ZUM AUFBAU EINER REIFENKARKASSE FÜR EINEN FAHRZEUGREIFEN**
DEVICE FOR CONSTRUCTING A CARCASS FOR A VEHICLE TIRE
DISPOSITIF DE MONTAGE D'UNE CARCASSE DE BANDAGE DE ROUE DE VÉHICULE

(30) Priorität: 10.11.2008 DE 102008037535
(43) Veröffentlichungstag der Anmeldung: 24.08.2011
(73) Patentinhaber: Continental Reifen Deutschland GmbH, 30165 Hannover (DE)
(72) Erfinder: LINNE, Stefan, 30900 Wedemark (DE); PAWLIK, Karl-Heinz, 30455 Hannover (DE)
(74) Vertreter: Finger, Karsten
(86) Internationale Anmeldenummer: PCT/EP2009/063442
(87) Internationale Veröffentlichungsnummer: WO 2010/052103

(56) Entgegenhaltungen:
- DE-A1- 1 925 304
- DE-A1- 2 105 530
- JP-A- 4 339 640
- JP-A- 6 246 846
- JP-A- 2000 296 563
- US-A- 2 971 562
- US-A- 3 740 293
- US-A- 3 950 212
- US-A- 4 010 058

## Beschreibung

Die Erfindung betrifft eine Vorrichtung zum Aufbau einer Reifenkarkasse für einen Fahrzeugreifen.

Bei der Reifenherstellung werden Aufbautrommeln für die Herstellung der Reifenkarkasse eingesetzt. Auf derartigen Aufbautrommeln werden einzelne Reifenaufbauteile in Form von Gummilagen mit Festigkeitsträgern aufgewickelt und zusammengesetzt. In einem der Verfahrensschritte werden die Reifenkerne mit Kernreitern an der entsprechenden Stelle positioniert, wobei anschließend die Einlagenenden um diese Reifenkerne herumgeschlagen werden. Anschließend wird die Reifenkarkasse von der Aufbautrommel entnommen und an einer weiteren Vorrichtung weiterverarbeitet.

Die US 3,950,212 zeigt eine herkömmliche Vorrichtung zum Aufbau einer Reifenkarkasse, wie sie aus dem Stand der Technik bekannt ist. Eine weitere Vorrichtung zum Aufbau einer Reifenkarkasse ist in US 3.740,293 offenbart.

Ein Nachteil von herkömmlichen Aufbautrommeln zur Herstellung von Reifenkarkassen besteht darin, dass die Kernzentrier-Vorrichtungen nicht für kleine Reifendimensionen geeignet sind. Das liegt unter anderem daran, dass der minimale Durchmesser der Kernzentrier-Vorrichtung durch den maximalen Durchmesser der Welle auf der Seite des Verschiebekastens vorgegeben wird. Auf dem Wellenende des Verschiebekastens ist ein sogenannter Balgträger angeordnet, der unter anderem pneumatisch angetrieben wird. Der Balgträger selbst ist über Pneumatikleitungen mit Leitungen im Verschiebekasten verbunden, wobei diese Pneumatikleitungen um die Welle des Verschiebekastens herum angeordnet sind. Diese Pneumatikleitungen verringern den minimalen Durchmesser der mit der Kernzentrier-Vorrichtung erreicht werden kann. Daher können herkömmliche Aufbautrommel für die Reifenkarkasse nicht für die Herstellung von Reifen mit einer Reifendimension von 13-Zoll oder kleiner genutzt werden.

Der Erfindung lag die Aufgabe zugrunde, eine Vorrichtung bereitzustellen, mit dem die Kernzentrier-Vorrichtungen variabel im Durchmesser expandierbar sind und die gleichzeitig für die Herstellung von kleinen Reifendimensionen genutzt werden können.

Gelöst wird die Aufgabe durch eine Vorrichtung gemäß Anspruch 1.

Ein Vorteil der Erfindung ist insbesondere darin zu sehen, dass sich durch diese Konstruktion der effektive Durchmesser der Welle des Verschiebekastens erheblich reduziert. Der am Wellenende angeordnete Balgträger wird jetzt nicht mehr über einen pneumatischen oder motorischen Antrieb in seiner axialen Position verfahren. Dadurch entfallen die Pneumatikleitungen, die bei den herkömmlichen Vorrichtungen um die Welle des Verschiebekastens angeordnet sind. Die axiale Position des Balgträgers auf der Seite des Verschiebekastens wird nunmehr durch die Positionierung des Verschiebekastens eingestellt. Ein weiterer Vorteil besteht darin, dass jetzt ausreichend Bauraum zur Verfügung steht, um die Balgträger mit einem motorischen Antrieb expandieren zu lassen. Die Vorrichtung ist durch die konstruktive Änderung daher in der Lage, ebenfalls Reifenkarkassen für kleine Reifendimensionen herzustellen. Diese kleinen Reifendimensionen betreffen 13-Zoll-Reifen bzw. noch kleinere Reifendimensionen. Ein weiterer Vorteil besteht darin, dass die Vorrichtung insgesamt flexibler und schneller bei einem Reifendimensionswechsel ist. Außerdem sind die Dimensions-Wechselzeiten kleiner.

In einer weiteren vorteilhaften Weiterbildung der Erfindung ist vorgesehen, dass der Ausfahrmechanismus des Stempels pneumatisch betrieben wird. Dadurch wird gewährleistet, dass bei unterschiedlichen Abständen zwischen den beiden Wellenenden immer ein gleichmäßig hoher Anpressdruck vorliegt, der die beiden Wellenenden miteinander koppelt.

In einer weiteren vorteilhaften Weiterbildung der Erfindung ist vorgesehen, dass der Stempel eine Stirnverzahnung für den Eingriff in das gegenüberliegende Wellenende der Antriebswelle für die Aufbautrommel aufweist. Die Stirnverzahnung gewährleistet eine effektive Kraftübertragung bzw. Moment-Übertragung zwischen beiden Wellenenden.

In einer weiteren vorteilhaften Weiterbildung der Erfindung ist vorgesehen, dass der Balgträger auf der Seite des Verschiebkastens mit einem motorischen Antrieb radial im Durchmesser vergrößert oder verkleinert wird. Dadurch kann der Balgträger mit einer hohen Präzision in bestimmte Positionen expandiert werden.

In einer weiteren vorteilhaften Weiterbildung der Erfindung ist vorgesehen, dass der Verschiebekasten in axialer Richtung verfahrbar mit einer Spindel angetrieben wird. Über den Spindelantrieb kann der Verschiebekasten mit einer hohen Präzision in eine bestimmte axiale Position verfahren werden, wobei diese axiale Position den Abstand zwischen dem Balgträger und der Aufbautrommel festlegt.

In einer weiteren vorteilhaften Weiterbildung der Erfindung ist vorgesehen, dass der Verschiebekasten in axialer Richtung mit einem motorischen Antrieb in einem definierten Abstand zur Aufbautrommel positioniert wird. Mit dem motorischen Antrieb ist ein einfaches Verfahren des Verschiebekastens in axialer Richtung möglich.

In einer weiteren vorteilhaften Weiterbildung der Erfindung ist vorgesehen, dass die Vorrichtung zwei Kernzentrier-Vorrichtungen aufweist, die in der Grundstellung koaxial um die zweite Welle des Verschiebekasten angeordnet sind. Die Anordnung der beiden Kernzentrier-Vorrichtungen koaxial um die zweite Welle des Verschiebekastens gewährleistet ein schnelles und effektives Einsetzen der vorkonfektionierten Reifenkerne in die Vorrichtung.

In einer weiteren vorteilhaften Weiterbildung der Erfindung ist vorgesehen, dass der Durchmesser der Kernzentrier-Vorrichtungen variabel einstellbar ist und an die herzustellende Reifendimension sowie den Durchmesser der Reifenkerne angepasst werden kann. Dadurch lässt sich die Vorrichtung für die Herstellung von Reifen mit unterschiedlichen Reifendimensionen einsetzen, wobei die Umrüstzeiten auf eine andere Reifendimension sehr klein sind.

In einer weiteren vorteilhaften Weiterbildung der Erfindung ist vorgesehen, dass die Kernzentrier-Vorrichtungen auf einen Durchmesser verkleinert werden kann, wodurch die Aufnahme von Reifenkernen für 13-Zoll-Reifen ermöglicht wird. Bei herkömmlichen Vorrichtungen zur Herstellung von Reifenkarkassen war die Herstellung von Reifenkarkassen mit entsprechend kleinen Reifendimensionen nicht möglich.

In einer weiteren vorteilhaften Weiterbildung der Erfindung ist vorgesehen, dass der Balgträger auf der Seite der Antriebswelle der Aufbautrommel mit einem motorischen Antrieb in axialer Richtung verfahren wird, wodurch der Abstand zwischen diesem Balgträger und der Aufbautrommel festgelegt wird. Mit diesem Abstand wird unter anderem die Breite der Reifenkarkasse festgelegt, wobei diese Breite bei unterschiedlichen Reifendimensionen oder Reifentypen variiert.

In einer weiteren vorteilhaften Weiterbildung der Erfindung ist vorgesehen, dass der Durchmesser der Balgträger auf der Seite der Antriebswelle der Aufbautrommel mit einem motorischen Antrieb verstellbar ist. Dadurch kann der Balgträger mit einer hohen Präzision in eine bestimmte Position verfahren werden.

Anhand eines Ausführungsbeispiels soll die Erfindung näher erläutert werden. Es zeigen:
- Fig. 1:: eine Prinzipsskizze der Vorrichtung
- Fig. 2:: eine Prinzipsskizze des rechten Vorrichtungsseite.

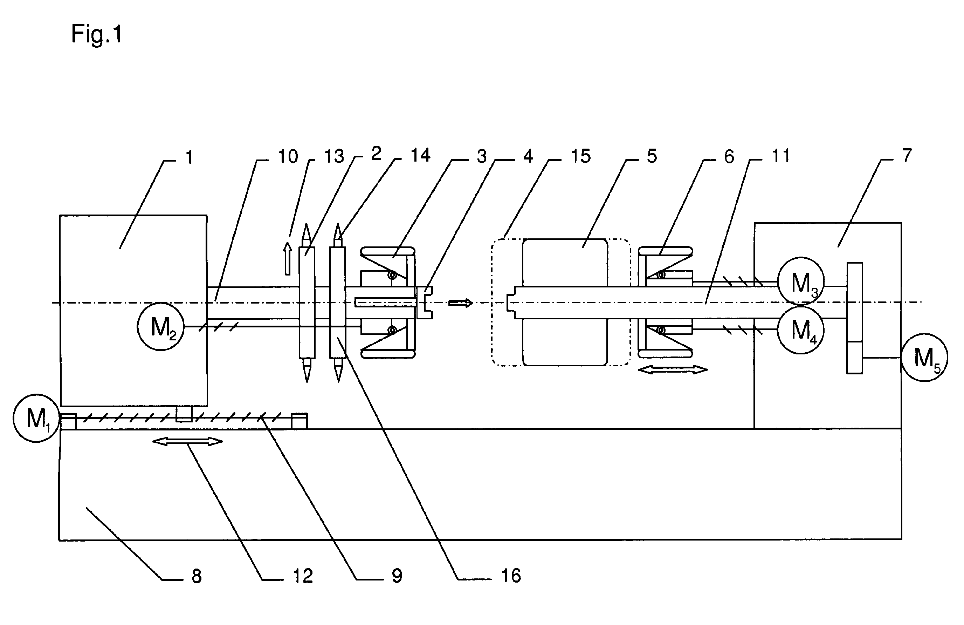

Die Figur 1 zeigt die Vorrichtung in einer Grundstellung. Die Vorrichtung umfasst eine Aufbautrommel bzw. Karkasstrommel 5, die auf einer Antriebswelle 11 rotierbar angeordnet ist. Die Antriebswelle 11 ist im Spindelkasten 7 drehbar gelagert und wird über den Motor M₅ angetrieben. Die gestrichelte Linie 15 zeigt eine mögliche breitere Aufbautrommel, die ebenfalls auf der Antriebswelle 11 angeordnet werden könnte, beispielsweise für größere Reifendimensionen. Auf beiden Seiten der Aufbautrommel 5 ist ein linker Balgträger 3 und ein rechter Balgträger 6 angeordnet. Der rechte Balgträger 6 wird über den Motor M₃ in seiner axialen Position entlang der Welle 11 verfahren. Die axiale Position des Balgträgers 6 ist von der jeweils benötigten Reifenkarkasse abhängig. Über den Motor M₄ erfolgt eine Durchmesserverstellung des Balgträgers in radialer Richtung 13. Die Balgträger 3 und 6 sind an ihrem Außenumfang mit aufblähbaren Bälgen versehen, die unter anderem die Einlagenenden um die Reifenkerne herumschlagen. Der linke Balgträger 3 ist am Wellenende der zweiten Welle 10 des Verschiebekastens 1 feststehend angeordnet. Der Balgträger 3 ist beispielsweise fest mit dem Wellenende der zweiten Welle 10 verschraubt. Die Welle 10 ist frei im Verschiebekasten 1 drehbar gelagert. Der Verschiebekasten 1 wird mit der Spindel 9 in axialer Richtung 12 angetrieben. Der Antrieb in axialer Richtung 12 des Verschiebekastens 1 erfolgt über den Motor M₁. Der Verschiebekasten 1 und der Spindelkasten 7 sind auf dem Unterbett 8 angeordnet.

Die Vorrichtung ist in ihrer Grundstellung dargestellt. In einem ersten Schritt werden die vorkonfektionierten Reifenkerne 14 mit Kernreitern auf den Kernzentrier-Vorrichtungen 2 positioniert. Die Kernzentrier-Vorrichtungen sind in ihrem Durchmesser variabel ausgeführt und ebenfalls für Reifenkerne für 13-Zoll-Reifen geeignet. In einem weiteren Schritt wird der Verschiebekasten 1 in axialer Richtung zum Spindelkasten hin verschoben, so dass der Balgträger 3 in einem vorgegebenen Abstand zur Aufbautrommel 5 positioniert wird. In der Regel wird der gleiche Abstand angefahren, wie er auf der gegenüberliegenden Seite der Aufbautrommel 5 zwischen dem rechten Balgträger 6 und der Aufbautrommel 5 eingestellt wurde. Als nächstes wird der Stempel 4 in Form einer Wellenkupplung pneumatisch aus dem Wellenende der zweiten Welle 10 ausgefahren, so dass der Stempel 4 in das gegenüberliegende Ende der Antriebswelle 11 eingreift und beide Wellenenden miteinander verkuppelt. In einem weiteren Verfahrensschritt fährt die rechte Kernsetz-Vorrichtung auf die rechte Maschinenseite zwischen Balgträger 6 und Spindelkasten 7. Anschließend erfolgt das Auflegen der Karkasslagen auf die Aufbautrommel 5 und die Balgträger 3 und 6. Nachdem die Reifenschulter gebildet wurde, werden die Reifenkerne an den entsprechenden Positionen der Reifenkarkasse positioniert und gesetzt. In einem weiteren Schritt werden die Einlagenenden um die Reifenkerne herumgeschlagen. Dieser Umschlagvorgang erfolgt im Wesentlichen durch das Aufblähen der Bälge, die an den Balgträgem 3 und 6 angeordnet sind.In einem weiteren Schritt expandieren die Balgträger und bilden mit der Karkasstrommel eine weitgehend zylindrische Oberfläche, auf der der Wulstverstärker und die Seitenstreifen aufgelegt werden. In einem weiteren Verfahrensschritt wird der Verschiebekasten wieder in seine Grundposition verfahren und der linke Balgträger axial von der Trommel weggefahren um Platz zum Einrollen des Wulstverstärkers und der Seitenstreifen um den Kern zu schaffen. Und anschließend die fertige Reifenkarkasse entnommen. Die Reifenkarkasse wird sodann an eine weitere Vorrichtung weitergegeben, wo der weitere Aufbau des Reifens erfolgt.

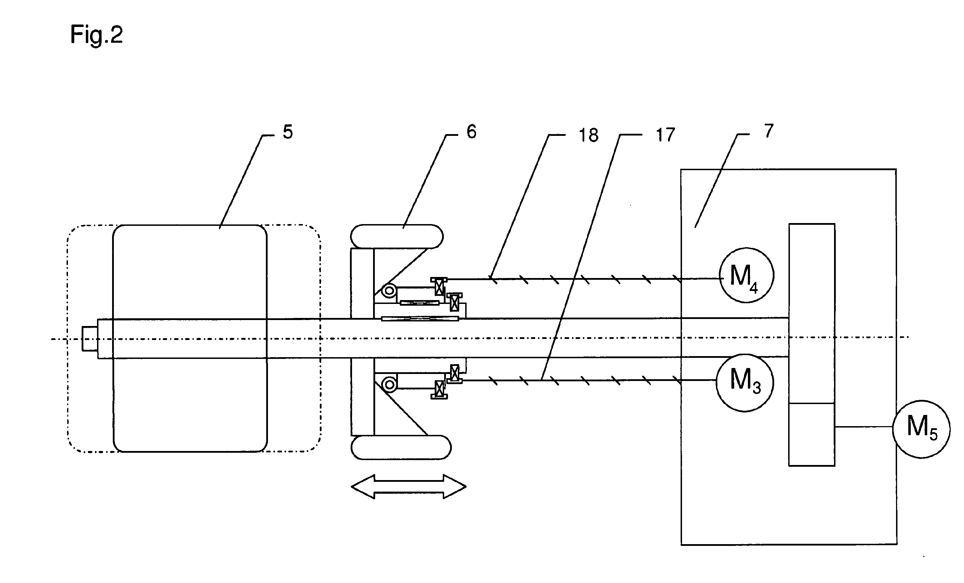

Die Fig. 2 zeigt eine eine Prinzipsskizze des rechten Maschinenseite in der Figur 1. Es sind im Wesentlichen die Karkasstrommel 1, der rechte Balgträger 6 und der Spindelkasten 7 dargestellt. Das Expandieren bzw. Durchmesserverstellung des Balgträgers 6 in radialer Richtung erfolgt über den motorischen Antrieb M₄ und die Spindel 18. Der Motorantrieb M₄ wird mittels eines Drehlagers von der Drehbewegung des Balgträgers 6 entkoppelt. Die Axialverstellung bzw. das axiale Verfahren des Balgträgers 6 in axialer Richtung 12 erfolgt über den motorischen Antrieb M₃ und die Spindel 17.

### Bezugszeichenliste

### (ist Teil der Beschreibung)

- 1: Verschiebekasten
- 2: linke Kernzentrier-Vorrichtung
- 3: Balgträger links
- 4: Stempel
- 5: Karkasstrommel bzw. Aufbautrommel
- 6: Balgträger rechts
- 7: Spindelkasten
- 8: Unterbett
- 9: Spindel-Antrieb Verschiebekasten
- 10: Zweite Welle am Verschiebekasten
- 11: Antriebwelle für Aufbautrommel
- 12: axiale Richtung
- 13: radiale Richtung
- 14: Reifenkern mit Kernreiter
- 15: breitere Aufbautrommel
- 16: rechte Kernzentrier-Vorrichtung
- 17: Spindel
- 18: Spindel

- M₁: Antrieb Verschiebekasten
- M₂: Antrieb Durchmesserverstellung Balgträger links
- M₃: Antrieb Axialverstellung Balgträger rechts
- M₄: Antrieb Durchmesserverstellung Balgträger rechts
- M₅: Antrieb für Rotationsbewegung der Aufbautrommel

## Patentansprüche

1. Vorrichtung zum Aufbau einer Reifenkarkasse für einen Fahrzeugreifen,
wobei die Vorrichtung eine Aufbautrommel (5) zum Aufwickeln einer Reifenkarkasse, jeweils einen Balgträger (3, 6) mit einem aufblähbaren Balg zum Umschlagen von Einlagen auf beiden Seiten der Aufbautrommel (5),
eine Antriebswelle (11) zum rotatorischen Antreiben der Aufbautrommel (5) und einen Verschiebekasten (1) mit einer zweiten Welle (10) aufweist, wobei
der Balgträger (3) auf der Seite des Verschiebekastens (1) feststehend mit der Welle (10) des Verschiebekastens (1) verbunden ist,
wobei der axiale Abstand zum Festlegen der Karkassbreite des herzustellenden Fahrzeugreifens zwischen Balgträger (3) und Aufbautrommel (5) über eine Positionierung des Verschiebekastens (1) in axialer Richtung (12) erfolgt,
wobei am Wellenende der zweiten Welle (10) des Verschiebekastens (1) ein ausfahrbarer Stempel (4) zum Aneinanderkoppeln an die Antriebswelle (11) der Aufbautrommel (5) angeordnet ist.

2. Vorrichtung nach Anspruch 1,
**dadurch gekennzeichnet, dass**
der Ausfahrmechanismus des Stempels (4) pneumatisch betrieben wird.

3. Vorrichtung nach einem der vorhergehenden Ansprüche,
**dadurch gekennzeichnet, dass**
der Stempel (4) eine Stirnverzahnung für den Eingriff in das gegenüberliegende Wellenende der Antriebswelle (11) für die Aufbautrommel (5) aufweist.

4. Vorrichtung nach einem der vorhergehenden Ansprüche,
**dadurch gekennzeichnet, dass**
der Balgträger (3) auf der Seite des Verschiebkastens (1) mit einem motorischen Antrieb (M₂) radial im Durchmesser vergrößert oder verkleinert wird.

5. Vorrichtung nach einem der vorhergehenden Ansprüche,
**dadurch gekennzeichnet, dass**
der Verschiebekasten (1) in axialer Richtung verfahrbar mit einer Spindel (9) angetrieben wird.

6. Vorrichtung nach einem der vorhergehenden Ansprüche,
**dadurch gekennzeichnet, dass**
der Verschiebekasten (1) in axialer Richtung mit einem motorischen Antrieb (M₁) in einem definierten Abstand zur Aufbautrommel (5) positioniert wird.

7. Vorrichtung nach einem der vorhergehenden Ansprüche,
**dadurch gekennzeichnet, dass**
die Vorrichtung zwei Kernzentrier-Vorrichtungen (2,4) aufweist, die in der Grundstellung koaxial um die zweite Welle (10) des Verschiebekastens (1) angeordnet sind.

8. Vorrichtung nach einem der vorhergehenden Ansprüche,
**dadurch gekennzeichnet, dass**
der Durchmesser der Kernzentrier-Vorrichtungen (2, 4) variabel einstellbar ist und an die herzustellende Reifendimension sowie den Durchmesser der Reifenkerne (4) angepasst werden kann.

9. Vorrichtung nach einem der vorhergehenden Ansprüche,
**dadurch gekennzeichnet, dass**
die Kernzentrier-Vorrichtungen (2, 4) auf einen Durchmesser verkleinert werden kann, wodurch die Aufnahme von Reifenkemen auch für kleinere Zoll-Reifen ermöglicht wird.

10. Vorrichtung nach einem der vorhergehenden Ansprüche,
**dadurch gekennzeichnet, dass**
der Balgträger (6) auf der Seite der Antriebswelle (11) der Aufbautrommel (5) mit einem motorischen Antrieb (M₃) in axialer Richtung (12) verfahren wird, wodurch der Abstand zwischen diesem Balgträger (6) und der Aufbautrommel (5) festgelegt wird.

11. Vorrichtung nach einem der vorhergehenden Ansprüche,
**dadurch gekennzeichnet, dass**
der Durchmesser der Balgträger (6) auf der Seite der Antriebswelle (11) der Aufbautrommel (5) mit einem motorischen Antrieb (M₄) verstellbar ist.

## Claims

1. Device for building a tire carcass for a vehicle tire, the device having a building drum (5) for winding a tire carcass, a respective bladder support (3, 6) with an inflatable bladder for wrapping around inserts on each of the two sides of the building drum (5), a drive shaft (11) for the rotary driving of the building drum (5) and a movement box (1) with a second shaft (10), the bladder support (3) on the side where the movement box (1) is located being fixedly connected to the shaft (10) of the movement box (1), the axial distance between the bladder support (3) and the building drum (5), for fixing the carcass width of the vehicle tire to be produced, being obtained by means of positioning the movement box (1) in the axial direction (12), an extendable ram (4) being arranged at the shaft end of the second shaft (10) of the movement box (1) for coupling onto the drive shaft (11) of the building drum (5).

2. Device according to Claim 1, **characterized in that** the extending mechanism of the ram (4) is pneumatically operated.

3. Device according to one of the preceding claims, **characterized in that** the ram (4) has an end toothing for engagement in the opposite shaft end of the drive shaft (11) for the building drum (5).

4. Device according to one of the preceding claims, **characterized in that** the bladder support (3) on the side where the movement box (1) is located is increased or reduced in diameter radially by a motorized drive (M₂).

5. Device according to one of the preceding claims, **characterized in that** the movement box (1) is driven movably in the axial direction by a spindle (9).

6. Device according to one of the preceding claims, **characterized in that** the movement box (1) is positioned in the axial direction at a defined distance from the building drum (5) by a motorized drive (M₁).

7. Device according to one of the preceding claims, **characterized in that** the device (1) has two core centering devices (2, 4), which in the basic position are arranged coaxially around the second shaft (10) of the movement box (1).

8. Device according to one of the preceding claims, **characterized in that** the diameter of the core centering devices (2, 4) can be variably set and can be adapted to the tire dimension to be produced as well as to the diameter of the tire cores (4).

9. Device according to one of the preceding claims, **characterized in that** the core centering devices (2, 4) can be reduced to a diameter whereby the receiving of tire cores for smaller inch tires is also made possible.

10. Device according to one of the preceding claims, **characterized in that** the bladder support (6) on the side where the drive shaft (11) of the building drum (5) is located is moved in the axial direction (12) by a motorized drive (M₃), whereby the distance between this bladder support (6) and the building drum (5) is fixed.

11. Device according to one of the preceding claims, **characterized in that** the diameter of the bladder support (6) on the side where the drive shaft (11) of the building drum (5) is located is adjustable by a motorized drive (M₄).

## Revendications

1. Dispositif de formation d'une carcasse de bandage de roue de véhicule, le dispositif présentant
un tambour de formation (5) destiné à enrouler une carcasse de bandage de roue,
un porte-soufflet (3, 6) qui présente un soufflet gonflable destiné à venir s'appliquer sur les deux côtés du tambour de formation (5),
un arbre d'entraînement (11) qui entraîne à rotation le tambour de formation (5) et
un caisson coulissant (1) qui présente un deuxième arbre (10),
le porte-soufflet (3) étant relié solidairement à l'arbre (10) du caisson coulissant (1) sur le côté du caisson coulissant (1),
la distance axiale entre le porte-soufflet (3) et le tambour de formation (5) destinée à définir la largeur de la carcasse du bandage de roue de véhicule à fabriquer étant définie par le positionnement du caisson coulissant (1) dans la direction axiale (12),
un poussoir déployable (4) qui s'accouple à l'arbre d'entraînement (11) du tambour de formation (5) étant disposé à l'extrémité du deuxième arbre (10) du caisson coulissant (1).

2. Dispositif selon la revendication 1, **caractérisé en ce que** le mécanisme de déploiement du poussoir (4) est entraîné pneumatiquement.

3. Dispositif selon l'une des revendications précédentes, **caractérisé en ce que** le poussoir (4) présente une denture frontale qui s'engage dans l'extrémité opposée de l'arbre d'entraînement (11) du tambour de formation (5).

4. Dispositif selon l'une des revendications précédentes, **caractérisé en ce que** le porte-soufflet (3) voit son diamètre agrandi ou diminué radialement par un entraînement motorisé (M₂) situé du côté du caisson coulissant (1).

5. Dispositif selon l'une des revendications précédentes, **caractérisé en ce que** le caisson coulissant (1) est entraîné par une broche (9) de manière à pouvoir se déplacer dans la direction axiale.

6. Dispositif selon l'une des revendications précédentes, **caractérisé en ce que** le caisson coulissant (1) est positionné dans la direction axiale par un entraînement motorisé (M₁) à une distance définie par rapport au tambour de formation (5).

7. Dispositif selon l'une des revendications précédentes, **caractérisé en ce que** le dispositif présente deux dispositifs (2, 4) de centrage d'âme qui, en position de base, sont disposés coaxialement par rapport au deuxième arbre (10) du caisson coulissant (1).

8. Dispositif selon l'une des revendications précédentes, **caractérisé en ce que** les diamètres des dispositifs (2, 4) de centrage d'âme peuvent être ajustés de manière variable et peuvent être adaptés aux dimensions du bandage de roue à fabriquer ainsi qu'au diamètre des âmes (4) de bandage de roue.

9. Dispositif selon l'une des revendications précédentes, **caractérisé en ce que** le diamètre des dispositifs (2, 4) de centrage d'âme peut être diminué, ce qui permet également de reprendre des âmes de bandage de roue pour des bandages de roues de plus petites dimensions.

10. Dispositif selon l'une des revendications précédentes, **caractérisé en ce que** le porte-soufflet (6) est déplacé dans la direction axiale (12) par un entraînement motorisé (M₃) du côté de l'arbre d'entraînement (11), ce qui permet de définir la distance entre ce porte-soufflet (6) et le tambour de formation (5).

11. Dispositif selon l'une des revendications précédentes, **caractérisé en ce que** le diamètre du porte-soufflet (6) peut être ajusté à l'aide d'un entraînement motorisé (M₄) situé du côté de l'arbre d'entraînement (11) du tambour de formation (5).
